# EUROPEAN PATENT APPLICATION

(11) **EP 1 641 200 A1**
(43) Date of publication of application: **29.03.2006**
(21) Application number: 04104730.9
(22) Date of filing: 28.09.2004
(51) Int. Cl.: H04L 12/58, H04Q 7/22

(54) **System and method to provide access to at least one multimedia**

(71) Applicant: iMoNext Holding B.V., 3431 BM Nieuwegein (NL)
(72) Inventor: Smits, Cornelis, 1606 CM Venhuizen (NL); Halberstadt, Bernard, 1112 JR Diemen (NL)
(74) Representative: de Vries, Johannes Hendrik Fokke

(57) **Abstract**

The invention relates to a system and method for providing access to at least one multimedia file obtained from a mobile device (5), wherein said mobile device is adapted to send said multimedia file using the simple mail transfer protocol (SMTP). The system comprises a receiving server (20) arranged to receive said SMTP multimedia file and a file server (21) arranged to provide access to said multimedia file. As an alternative to the prior art systems and methods, using MMS messages to provide access to multimedia files, the multimedia files according to the invention are received as an SMTP encapsulated multimedia file.

## Description

The invention relates to a system and method to provide access to at least one multimedia file from a mobile device.

In recent years, users of mobile devices, such as mobile telephones, have sent messages to one another over mobile radio networks. As an example, users employ Short Message Services (SMS) to send text messages of limited size to one another. However, triggered by the advanced possibility to send large files over the internet, users require to send such larger files also over wireless networks. Such files include video files, audio files, combinations of video and audio files, image files, large text files, photograph files etc. These files are generally referred to as multimedia files.

As technology has evolved, bandwidth in mobile radio networks has greatly increased. This increased bandwidth makes it possible for users of mobile devices to send larger files to one another. In addition, processing and memory capacity of mobile devices has advanced, permitting multimedia files to be processed, stored and presented by the mobile device. Therefore it is now possible to send multimedia files to and from mobile devices.

The multimedia messaging service (MMS) is the standard for sending and receiving multimedia files. MMS supports various formats, such a GIF and JPEG for pictures and photograph files, MP3 and MIDI for audio files and MPEG for video files. MMS messages are sent between mobile devices and MMS servers over the voice or data channel using a wireless application protocol (WAP). US2001/053687 discloses such an MMS-system. In this way access to multimedia files from a mobile device can be provided for the user of another mobile device.

It is an object of the present invention to provide an alternative system and method to provide access to multimedia files.

This object is achieved by a system for providing access to at least one multimedia file obtained from a mobile device, wherein said mobile device is adapted to send said multimedia file using the simple mail transfer protocol (SMTP), said system comprising
- a receiving server arranged to receive said SMTP multimedia file;
- a file server arranged to provide access to said multimedia file.

This object is further achieved by a method for providing access to at least one multimedia file obtained from a mobile device, wherein said mobile device is adapted to send said multimedia file using the simple mail transfer protocol (SMTP), said method comprising the steps of:
- receiving said SMTP multimedia file at a receiving server;
- providing access to said multimedia file at a file server.

As an alternative to the prior art systems and methods, using MMS messages to provide access to multimedia files, the multimedia files according to the invention are received as an SMTP encapsulated multimedia file, i.e. as an e-mail message. To this end, the mobile devices may be provided with a dial-up modem and a POP3 client. According to the invention, the SMTP encapsulation is removed and the multimedia file is made available by or via the file server. It should be appreciated that the receiving server function and file server function may be physically integrated in the same unit or functionally distributed over e.g. a network. It should further be appreciated that access to multimedia files includes exchange of multimedia files.

In a particularly advantageous embodiment of the invention, the system and method relate to the receipt of a SMTP encapsulated multimedia file over a circuit switched GSM connection at an SMTP server that is arranged, in response to receiving the SMTP-encapsulated multimedia file, to automatically transmit a WAP push message to one or more mobile devices for retrieval of the multimedia file.

Further advantageous embodiments and aspects thereof are defined in the dependent claims and will be described in the description.

The invention will be further illustrated with reference to the attached drawings, which schematically show a preferred embodiment according to the invention. It will be understood that the invention is not in any way restricted to this specific and preferred embodiment.

Fig. 1 schematically illustrates a telecommunication system according to an embodiment of the invention, and

Fig. 2 displays a communication protocol according to an embodiment of the invention.

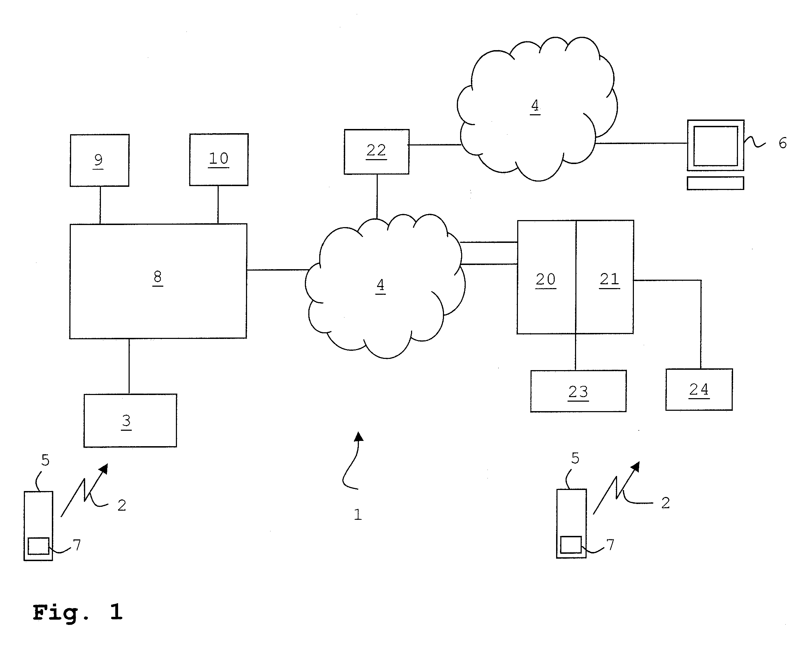

Fig. 1 schematically illustrates a telecommunication system 1 comprising mobile radio networks 2 having a mobile switching center (MSC) 3 and a wired network 4, such as the internet. It should be appreciated that the mobile radio networks 2 and internet 4 may be operated by different parties. Mobile devices 5, 5', such as cellular phones, and devices 6, such as personal computers, form part of the telecommunication system 1. Multimedia files, such as video files, audio files, combinations of video and audio files, image files, large text files, photograph files etc. may be present in or generated by the mobile device 5.

Although the mobile radio networks 2 may provide a data channel for packet switched transmission of multimedia message files, such as General Packet Radio Service (GPRS) or Universal Mobile Telecommunication Service (UMTS), preferably the mobile radio network provides a wireless circuit switched connection for transmission of multimedia message files over a voice channel of e.g. a Global System for Mobile communication (GSM). Other carrier protocols alike GSM, based on systems like Code Division Multiple Access (CDMA) or Time Division Multiple Access (TDMA), enabling circuit switched connection can be employed as well.

According to the invention, mobile devices 5 not suitable to transmit data over a packet switched connection or users of mobile devices 5 that do not want to use a packet switched connection for transmitting their multimedia files may use the voice channel for data transmission. Although generally transmission over a circuit switched connection is slower than for packet switched connections, users may still prefer this slower connection for cost considerations or an alternative connection solution. Telecom operators currently do not always provide packet switched services for all users.

To enable the mobile devices 5 to communicate over the GSM radio network 2, the mobile devices 5 have a modem 7 and a POP3 client to establish a dial-up connection with a modem pool of e.g. an Internet Service Provider (ISP) 8. The ISP 8 has access to an authentication server 9, such as a Remote Authentication Dial-In User Service (RADIUS) server, to authenticate dial-in users and authorize their access to the requested system or service. The RADIUS server 9 also is adapted to monitor the duration of the connection of the mobile device 5 for billing purposes. According to an aspect of the invention, the users of mobile devices 5 are not billed on the basis of the transmitted amount of data, as is the case with e.g. GPRS data switched connections, but on the basis of the connection time of the mobile device 5.

Further the ISP 8 has access to an address assignment server 10, such as a Dynamic Host Configuration Protocol (DHCP) server, to manage the assignment of IP addresses to the mobile devices 5 for connection to the internet 3.

The ISP 8 is further connected to a receiving server 20, particularly an SMTP server, i.e. an e-mail server, and a file server 21 over an internet connection 4. The e-mail sever or SMTP server 20 and file server 21 are shown as an integrated server, but it should be appreciated that both servers may be part of separate units in communicative connection.

The SMTP server 20 receives SMTP encapsulated multimedia files transmitted from the mobile device 5 over a GSM radio network 2 to the modem pool of the ISP 8 that forwards the SMTP encapsulated multimedia files over the internet 4 to the SMTP server 20. Here, the SMTP encapsulation is removed in order to provide access to the multimedia file in the file server 21. Further the destination for the multimedia file, as instructed by the user of the mobile device 5, may be analyzed here.

Access to the multimedia file can be provided in various ways. In an embodiment of the invention, a hosting server 22 is provided to allow access to the multimedia file for the PC 6 over the internet 4. Accordingly, the user of the mobile device 5 transmitting a multimedia message according to the invention can easily publish his files on the internet, e.g. for weblog, blog or storage only purposes. The multimedia file may e.g. also be made available for authorized access, e.g. by making it accessible on a website requiring authorization. It should be appreciated that the function of the hosting server 22 can be integrated in the file server 21.

In a further embodiment of the invention, the file server 21 is connected to a notification message transmitter 23, such as an SMS-gateway. The transmitter 23 sends notification messages to the further mobile device 5' to notify arrival of a multimedia file at the file server 21 for the user of the further mobile device 5'. The notification message is e.g. an SMS WAP push message. The notification message comprises a link to download the multimedia file to the further mobile device 5' over the mobile radio network 2 from a further server 24. It is noted that downloading by the further mobile device 5' uses WAP over e.g. a circuited switched connection. Alternatively, the carrier may e.g. be GPRS or UMTS.

It should be appreciated that the multimedia file may also be downloaded from the file server 21. According to this aspect of the invention, the user of the further mobile device 5' has a choice to download or to refrain from downloading the multimedia file. In an aspect of the invention, the user of the further mobile device 5' may be also billed for downloading the multimedia file. The multimedia file may have been forwarded from the file server 21 to a further server 24 for retrieval of the multimedia file by the further mobile device 5'.

The user of the mobile device 5 may determine how access should be provided to the multimedia file transmitted over the above-described system. In an aspect of the invention, the user may include additional data in e.g. the header of the SMTP message or in the multimedia files that is indicative of the destination or destinations of the multimedia file. These additional data may relate to an instruction on how to provide access to the multimedia file and a destination. These additional data are processed in e.g. the file server 21. The instruction may e.g. relate to publishing the multimedia file on the internet, storing the multimedia file for limited access or forwarding the multimedia file to the further mobile device 5'. The destination may e.g. relate to the hosting server 22 or the name or MSISDN number of the further mobile device 5'. If the destination is indicated by a nickname, the file server 21 may have access to a database coupling this name to the MSISDN number of the further mobile device 5'.

As an example, if the SMTP address of the addressee is john.12345@mymoyoo.nl, this indicates that the multimedia file attached to the e-mail has a public website as a destination. In contrast, the SMTP address john.12345.np@mymoyoo.nl indicates a private website as the destination, wherein 'np' indicates 'not publish'. Further, the multimedia file attached to the e-mail may have text space for additional data, specifying that the multimedia file should also be transmitted by WAP push to a further mobile device 5'. The destination of the further mobile device 5' can be the MSISDN number of the further mobile device 5' or a nickname uniquely coupled to an MSISDN number accessible for the file server 21. Further alternatives for addressing remote devices include the name of a person identified by the unique nickname of another user in the system, an entry in the online address book of the sender and a personal distribution list (groupname) in the address book of the sender. This personal distribution list contains one or more entries of the online address book of the sender, in which case all members of the distribution list receive a notification message for access to the multimedia file.

The invention relates to the telecommunication system 1 and every component and/or combination of components as described above.

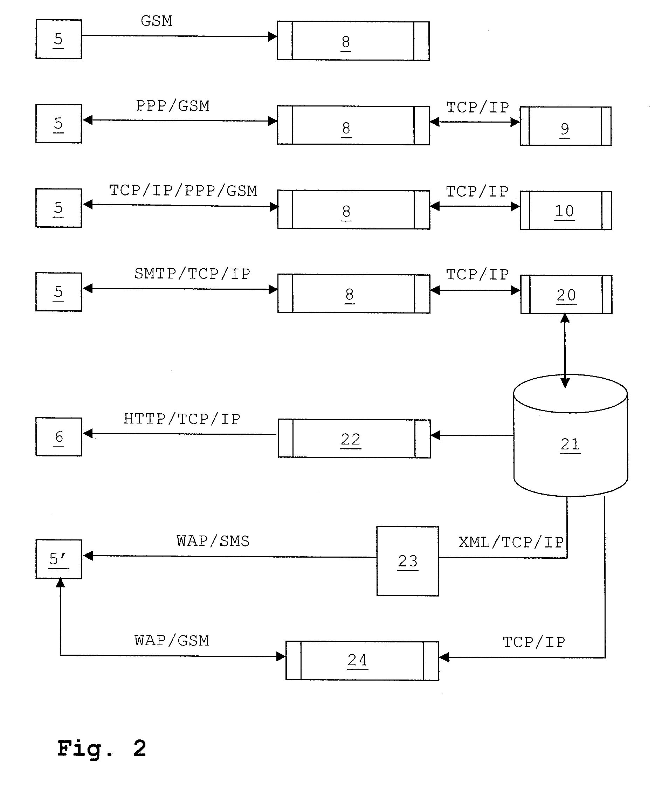

Fig. 2 displays a communication protocol in the well known OSI representation according to an embodiment of the invention for providing access to a multimedia file from a mobile device 5. The mobile radio network 2 has been omitted in the illustration.

When the user of the mobile device 5 wants to provide access to a multimedia file present in his mobile device 5, he connects the device to the GSM network (OSI-layer 1). A circuit switched data-link, here referred to a Point-to-Point (PPP) connection is established with the ISP 8 for handshaking and authentication purposes (OSI-layer 2). Hereto, the ISP 8 contacts the RADIUS server 9 using TCP/IP to check whether a valid username and password are used and to start timing the duration of the connection for billing purposes as described above.

In a next stage (OSI layer 3) the ISP 8 contacts the DHCP server 10 to assign a temporary IP address to the mobile device 5 to allow an internet connection. Subsequently (OSI-layer 4) the mobile device 5 logs in on the SMTP-server 20 and a SMTP encapsulated multimedia file is transmitted, using the modem 7 of the mobile device 5, over the voice channel of the GSM network 2 to a modem of the ISP 8. The ISP 8 forwards the SMTP encapsulated multimedia file over the internet 4 to the e-mail server 20 and access is provided to the multimedia file at the file server 21.

As explained above, the multimedia file may comprise additional data indicative of the destination of this file.

If the user of the mobile device 5 wants to provide access to the multimedia file over the internet 4, he may indicate this destination in the additional data that are analysed at the file server 21. The multimedia file is transferred or copied to the hosting server 22 and access is provided using http over TCP/IP as indicated in Fig. 2 for the personal computer 6. Accordingly, e.g. a weblog may be provided with the multimedia file.

If the user of the mobile device 5 wants to provide access to the multimedia file for the user of a further mobile device 5', he may indicate this destination in the additional data. The file server 21 analyses this destination and contacts the SMS gateway 23 using eXtendible Markup Language (XML) over TCP/IP. The SMS gateway 23 transmits a notification message using an SMS WAP push (OSI layer 7) with a link to the multimedia file in the file server 21 or further server 24. This multimedia file can, at the choice of the user of the further mobile device 5', be retrieved via WAP over GSM.

## Claims

1. A system for providing access to at least one multimedia file obtained from a mobile device (5), wherein said mobile device is adapted to send said multimedia file using the simple mail transfer protocol (SMTP), said system comprising
- a receiving server (20) arranged to receive said SMTP multimedia file;
- a file server (21) arranged to provide access to said multimedia file.

2. The system according to claim 1, wherein said system further comprises one or more modems (8) to receive said at least one SMTP multimedia file over a wireless circuit switched connection (2).

3. The system according to claim 1 or 2, wherein said system further comprises a hosting server (22) to allow access to said multimedia file using the hypertext transfer protocol (http).

4. The system according to one or more of the preceding claims, wherein said system is further adapted to transmit a notification message notifying a further mobile device (5') of the receipt of said multimedia message at said file server (21).

5. The system according to claim 4, wherein said notification message is a SMS-message with a link to access said multimedia file.

6. The system according to one or more of the preceding claims, wherein said system is further arranged to receive additional data indicative of one or more destinations (5',6) for said multimedia file and to provide access to said multimedia file in accordance with said additional data.

7. The system according to one or more of the preceding claims, wherein said system is further arranged for timing the duration of the connection of said mobile device to the system.

8. A method for providing access to at least one multimedia file obtained from a mobile device (5), wherein said mobile device is adapted to send said multimedia file using the simple mail transfer protocol (SMTP), said method comprising the steps of:
- receiving said SMTP multimedia file at a receiving server (20);
- providing access to said multimedia file at a file server (21).

9. The method according to claim 9, further comprising the step of receiving said SMTP multimedia message at a modem (8) over a wireless circuit switched connection (2) and transmitting said SMTP multimedia message to said receiving server (20).

10. The method according to claim 8 or 9, further comprising the step of providing access to said multimedia file using the hypertext transfer protocol (http).

11. The method according to one or more of the claims 8-10, further comprising the step of notifying a further mobile device (5') by a notification message of the receipt of said multimedia file at said file server.

12. The method according to claim 11, wherein said notification message is a SMS-message with a link to access said multimedia message.

13. The method according to one or more of the claims 8-12, further comprising the step of receiving additional data indicative of one or more destinations (5',6) for said multimedia file and providing access to said multimedia file in accordance with said additional data.

14. The method according to one or more of the claim 8-13, further comprising the step of timing the duration of the connection of said mobile device for performing the method.
